# EUROPEAN PATENT APPLICATION

(11) **EP 3 290 322 A1**
(43) Date of publication of application: **07.03.2018**
(21) Application number: 17188080.0
(22) Date of filing: 28.08.2017
(51) Int. Cl.: B62M 6/65, B62M 11/16

(54) **WHEEL HUBS AND POWER WHEELS CONTAINING THE SAME**

(30) Priority: 30.08.2016 US 201615251685
(71) Applicant: Foster Assets Corporation, Hong Kong (CN)
(72) Inventor: CHAN, Yet, Kwun Tong, Hong Kong (CN)
(74) Representative: Marks & Clerk (Luxembourg) LLP

(57) **Abstract**

A wheel hub capable of being coupled to an axle of a wheel such that the wheel hub is rotatable around the axle. The wheel hub includes a hub housing adapted to be rotatably supported on the axle, and a motor including a stator and a rotor. The stator is adapted to be fixedly connected to the axle. The rotor is configured to be rotatable with respect to the stator. The rotor includes a circular rotor housing inside which a gear reduction module is located. The output of the gear reduction module is connected to a one-way transmission module which in turn is adapted to drive the hub housing to rotate. As the gear reduction module and the one-way transmission module are contained within the rotor, the size of the power wheel can be reduced without sacrificing the performance.

## Description

### FIELD OF INVENTION

This invention relates to vehicle wheels which are self-propelled, and which are suitable for installing on bicycles, tricycles and four-wheel vehicles.

### BACKGROUND OF INVENTION

Many modem bicycles and other types of light vehicles are designed to use electric power for driving the wheels to advance, as a replacement of manual pedaling or as a supplement to it. For example, self-propelled wheels which are also known as power wheels, are installed on such bicycles which do not need an external motor and/or battery mounted on the bicycle frame, since the power wheels themselves contain internal motors and rechargeable batteries. Bicycles equipped with one or two power wheels usually have a similar appearance as conventional manual-pedaling bicycles due to the integrated design of power wheels with no exposed components. All the essential components of a power wheel are usually accommodated within a wheel hub located at the center of the power wheel.

In order for the motor in the power wheel to drive the power wheel, the typical high-speed and low-torque output of the motor must be converted to a low-speed and high-torque rotational force in order to drive the power wheel. Well-known mechanisms like gear reduction modules and one-way transmission means are used to couple the motor to the power wheel in order to perform such conversions. However, in conventional power wheels a substantial portion of the space inside hub of the power wheel has to be used to place the gear reduction modules and/or the one-way transmission means. Such configurations no doubt increase the overall size of the power wheel hub and make the appearance of the power wheel less appealing.

### SUMMARY OF INVENTION

In the light of the foregoing background, it is an object of the present invention to provide an alternate power wheel and it wheel hub structure which eliminate or at least alleviate the above technical problems.

The above object is met by the combination of features of the main claim; the subclaims disclose further advantageous embodiments of the invention.

One skilled in the art will derive from the following description other objects of the invention. Therefore, the foregoing statements of object are not exhaustive and serve merely to illustrate some of the many objects of the present invention.

Accordingly, the present invention in one aspect is a wheel hub capable of being coupled to an axle of a wheel such that the wheel hub is rotatable around the axle. The wheel hub includes a hub housing adapted to be rotatably supported on the axle, and a motor including a stator and a rotor. The stator is adapted to be fixedly connected to the axle. The rotor is configured to be rotatable with respect to the stator. The rotor includes a circular rotor housing inside which a gear reduction module is located. The output of the gear reduction module is connected to a one-way transmission module which in turn is adapted to drive the hub housing to rotate.

Preferably, the gear reduction module further includes an eccentric gear module. An input of the eccentric gear module is connected to the rotor housing. An output of the eccentric gear module is connected to the one-way transmission module.

More preferably, the eccentric gear module further includes an eccentric gear adapted to be rotatably supported on the axle. The eccentric gear is fixedly connected to the rotor housing and being drivable by the latter to rotate.

According to one variation of the preferred embodiments, the eccentric gear is coupled to an external ring gear via a connecting member. The external ring gear is adapted to revolve within an internal ring gear fixedly mounted on the hub housing.

According to another variation of the preferred embodiments, the external ring gear includes external teeth; the internal ring gear including internal teeth. Only a part of the external teeth engages with only a part of the internal teeth at any time. The external ring gear has a central axis offset from that of the internal ring gear.

According to a further variation of the preferred embodiments, the number of the external teeth is smaller than that of the internal teeth.

In one implementation, the external ring gear is coupled to an output carrier to drive the latter to rotate. The output carrier is coupled to the one-way transmission module to provide the output of the gear reduction module thereto. The output carrier has a same axis of rotation with the rotor.

In another implementation, the gear reduction module is a planetary gear module. An input of the planetary gear module is connected to an output shaft of the motor. An output of the planetary gear module is connected to the hub housing.

Preferably, the planetary gear module further includes a sun gear adapted to be rotatably supported on the axle. The sun gear is fixedly connected to the rotor housing and being drivable by the latter to rotate.

More preferably, the sun gear is coupled to a plurality of planetary gears confined by an internal ring gear fixedly mounted on the hub housing. The planetary gears are adapted to revolve around the sun gear within the internal ring gear.

According to one variation of the preferred embodiments, the plurality of planetary gears is coupled to an output carrier to drive the latter to rotate. The output carrier is coupled to the one-way transmission module to provide the output of the gear reduction module thereto. The output carrier has a same axis of rotation with the axle.

According to another variation of the preferred embodiments the one-way transmission module is a one-way transmission clutch.

Alternatively, the one-way transmission module is a one-way bearing supporting the gear reduction module on the hub housing.

In one implementation, the one-way bearing is at least partially received in the rotor housing.

In another implementation, the wheel hub further includes a sprocket fixedly connected to the housing. The sprocket is adapted to be connected to and driven by an external chain.

According to another aspect of the present invention, there is disclosed a power wheel which is adapted to be coupled to a vehicle frame. The power wheel includes an axle for connecting the power wheel to the vehicle frame, a wheel hub, and a rim fixedly connected to a hub housing of the wheel hub. The wheel hub includes a hub housing adapted to be rotatably supported on the axle, and a motor including a stator and a rotor. The stator is adapted to be fixedly connected to the axle. The rotor is configured to be rotatable with respect to the stator. The rotor includes a circular rotor housing inside which a gear reduction module is located. The output of the gear reduction module is connected to a one-way transmission module which in turn is adapted to drive the hub housing to rotate.

Preferably, the power wheel further includes a plurality of spokes; the housing of the wheel hub connected to the rim by the plurality of spokes.

According to a further aspect of the present invention, there is disclosed a wheel hub capable of being coupled to an axle of a wheel such that the wheel hub is rotatable around the axle. The wheel hub includes a hub housing adapted to be rotatably supported on the axle, and a motor including a stator and a rotor. The stator is adapted to be fixedly connected to the axle. The rotor configured to be rotatable with respect to the stator. The rotor includes a rotor housing. The rotor further includes a one-way transmission module and a bearing which are located within the rotor housing.

Preferably, the one-way transmission module and the bearing couple the rotor to an output carrier. The output carrier is fixedly connected to the hub housing and adapted to drive the latter to rotate with respect to the axle.

More preferably, the one-way transmission module and the bearing are aligned along an axial direction of the motor.

In one implementation, the one-way transmission module is a one-way bearing.

According to a further aspect of the present invention, there is disclosed a power wheel which is adapted to be coupled to a vehicle frame. The power wheel includes an axle for connecting the power wheel to the vehicle frame, a wheel hub, and a rim fixedly connected to a hub housing of the wheel hub. The wheel hub includes a hub housing adapted to be rotatably supported on the axle, and a motor including a stator and a rotor. The stator is adapted to be fixedly connected to the axle. The rotor configured to be rotatable with respect to the stator. The rotor includes a rotor housing. The rotor further includes a one-way transmission module and a bearing which are located within the rotor housing.

There are many advantages to the present invention. Firstly, by positioning the gear reduction modules and one-way transmission mechanisms within the rotor of the motor rather than placing them outside of the motor, the overall size of the wheel hub is significantly reduced in particular in terms of the width (that is, the distance between the two side covers of the wheel hub housing). The power wheels according to the present invention therefore has a smaller width, and can be made more like conventional bicycle wheels (i.e. non-power wheel type), which are visually appealing to the users. At the same time, the performance of the power wheel is not sacrificed, as the speed reduction and one-way clutch modules are kept in the power wheels.

From another point of view, placing the gear reduction modules and one-way transmission mechanisms within the rotor, means that for the same overall size of the wheel hub, the motor itself is allowed to have a larger size, and inherently achieves a better performance. It is appreciated by those skilled in the art that a larger motor (which would have for example more coil windings on the stator teeth, and more magnets on the rotor) outputs a stronger rotational force with higher speed and larger torque due to the enhanced magnetic field intensity. Therefore, the power wheels in the present invention can be varied to accommodate larger motors to improve the performance of the power wheels, without the need to compromise for form factors.

The power wheel provided by the present invention is particularly useful for the next-generation four-wheel vehicles. Compared to traditional vehicles in which the mechanical driving force comes from an internal combustion engine and/or a central electric motor, vehicles equipped with the power wheels can completely get rid of any engine or motor that occupies the front engine compartment in the vehicle. The number of power wheels can be two or four for example, depending on whether the vehicle is a 2-wheel drive type or a 4-wheel drive type. A central controller in the vehicle is used to control the power wheels so that each wheel of the vehicle can output different torque. In other words, there is no more "torque split" as in the conventional vehicles, but instead the torque of each wheel can be adjusted when needed. Such a configuration is useful for off - road vehicles in which the adjustable torque is required to overcome various terrain difficulties. In addition, since there is no centralized engine or motor, there is no need for the mechanical transmission system in the vehicle. The vehicle equipped with power wheels is therefore less prone to mechanical failure, and at the same time provide more inner space for the passengers and/or cargo.

### BRIEF DESCRIPTION OF FIGURES

The foregoing and further features of the present invention will be apparent from the following description of preferred embodiments which are provided by way of example only in connection with the accompanying figures, of which:
Fig. 1 is a front view of the power wheel according to a first embodiment of the present invention.
Fig. 2 is a side cross-sectional view of the wheel hub in the power wheel shown in Fig. 1; which contains an eccentric gear module.
Fig. 3 shows engagement relationship of the external ring gear and internal ring gear in the gear reduction module in the wheel hub of Fig. 2.
Fig. 4 is a side cross-sectional view of the wheel hub according to another embodiment of the present invention; the wheel hub including a planetary gear module.
Fig. 5 illustrates the planetary gear module in the wheel hub of Fig. 4.
Fig. 6 is a side cross-sectional view of the wheel hub according to further embodiment of the present invention; the wheel hub including no gear reduction mechanisms.
Fig. 7 is a side cross-sectional view of a motor in a power wheel according to a further embodiment of the present invention; the motor including a planetary gear module.
Fig. 8 illustrates the planetary gear module in the motor of Fig. 7.
Fig. 9 is a side cross-sectional view of a motor in a power wheel according to a further embodiment of the present invention; the motor including a planetary gear module.
Fig. 10 illustrates the planetary gear module in the motor of Fig. 9.
Fig. 11 is a side cross-sectional view of a motor in a power wheel according to a further embodiment of the present invention; the motor including a planetary gear module.
Fig. 12 is a side cross-sectional view of a power wheel according to a further embodiment of the present invention; the power wheel can be equipped on a four-wheel vehicle.

In the drawings, like numerals indicate like parts throughout the several embodiments described herein.

### DETAILED DESCRIPTION OF THE PREFERRED EMBODIMENTS

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

As used herein and in the claims, "couple" or "connect" refers to electrical coupling or connection either directly or indirectly via one or more electrical means unless otherwise stated.

Terms such as "horizontal", "vertical", "upwards", " downwards", "above", "below" and similar terms as used herein are for the purpose of describing the invention in its normal in-use orientation and are not intended to limit the invention to any particular orientation.

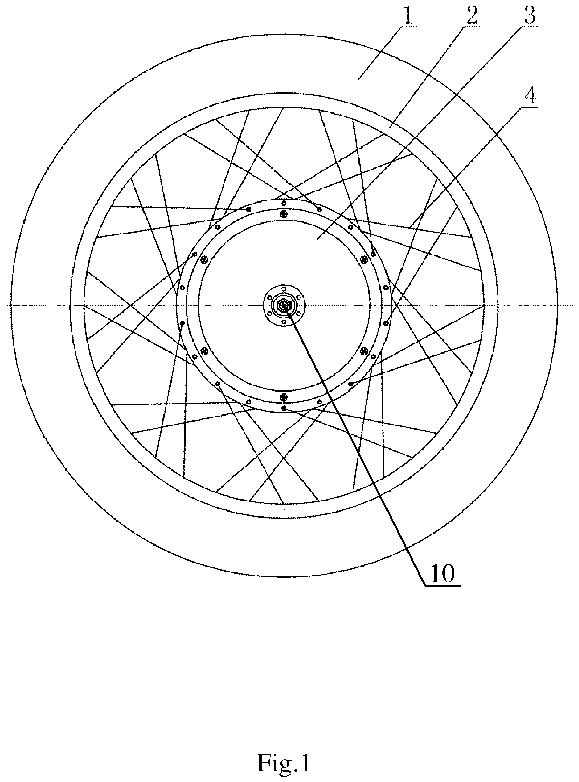

Fig. 1 shows a power wheel according to a first embodiment of the present invention. The power wheel includes a wheel tire **1,** a rim **2,** a wheel hub **3,** and a plurality of spokes **4.** The wheel hub **3** is connected to the rim **2** by the plurality of spokes **4,** so that the rim **2** and the wheel hub **3** rotate together when the wheel hub **3** is driven to move by a mechanical force. To be able to rotate, the wheel hub **3** and in turn the rim **2** are rotatably supported on an axle **10** (which will be described in details later). The tire **1** covers the exterior surfaces of the rim **2** to protect the rim and enable better vehicle performance, as skilled persons in the art would appreciate. The power wheel in this embodiment is made to a dimension of a typical bicycle wheel, so that the power wheel can be used to replace a normal bicycle wheel on an existing bicycle by simply coupling the axle **10** to the frame or more specifically a dropout of the bicycle frame (not shown).

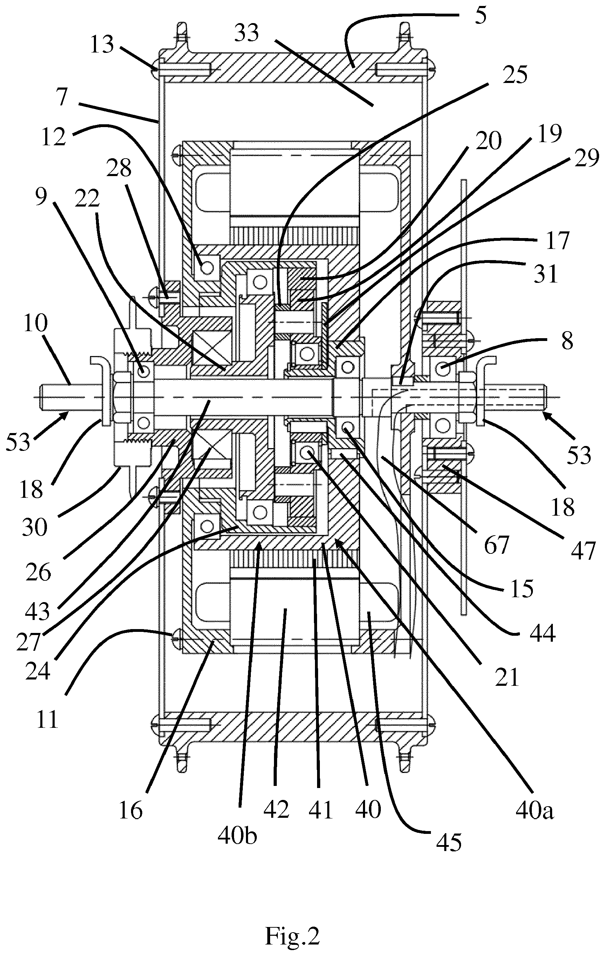

Turning now to Fig. 2, the housing of the wheel hub is defined by a circular top cover **5,** and two side covers **7,** all of which are connected to each other by screws **13** so as to form an integral piece. All the components necessary for the self-propelling operation of the power wheel are contained within the housing. The wheel hub housing is rotatably supported on the axle **10** by a first bearing **8** and a second bearing **9.** The width of the housing, which is defined by the distance between the portions of the two side covers **7** separated furthest away, is larger than the width of the tire **1.** The housing width is so determined in order for the housing to accommodate the motor, while other transmission mechanisms are accommodated within the motor and they do not occupy internal space in the wheel hub outside of the motor. On one end of the axle **10,** there is configured a sprocket **30** which is fixed to the adjacent side cover **7** and rotatable together with the same. The sprocket **30** is capable of engaging with a chain (not shown) of a bicycle as those skilled in the art would understand.

The two ends **53** of the axle **10** are shaped to have a flattened cross-section, and in other words the two ends **53** have a cross-section of which the dimension along one orthogonal direction is different from the dimension along another orthogonal direction. Corresponding to such flattened cross-sectional shape of the axle ends **53,** two hook washers **18** are configured to sleeve the two ends **53** of the axle **10** respectively through flattened openings (not shown) formed on the hook washers **18.** The openings have a shape which is also flattened, and thus they are corresponding to the cross-sectional shape of the axle ends **53.** Therefore, the axle **10** is prohibited from rotating with respect to the hook washers **18** due to the flattened axle ends **53** and the hook washers **18.** The hook washers **18** are used to install the axle and the power wheel to the dropouts on a bicycle frame (not shown) as those skilled in the art would understand. Electric wires **67** connect the motor in the power wheel hub to external controllers and/or additional batteries which are typically mounted on the frame of the bicycle.

As shown in Fig. 2, the motor is contained within the hub housing at a center thereof. The size of the motor is defined by a motor housing **16** which has a similar form factor as the hub housing but only smaller than the hub housing. The motor housing **16** has a flat key **31** which fits to a corresponding recess portion (not shown) of the axle **10,** so that the motor as a whole is firmly connected to axle **10** and not rotatable with respect to the axle **10.** Between the motor and the top cover **5** as well as bottom cover **6,** there are other internal spaces **33** which are used to place other components of the power wheel such as batteries (not shown). The motor housing **16** are consisted of several pieces (not shown individually) which are connected together by screws **11.** The structure of the motor housing **16** is therefore similar to the housing of the wheel hub. Within the motor housing **16,** there are contained a rotor **40** and a stator **42,** which are coaxial with the axle **10** around a central axis **43.** Coil windings **45** are configured on the stator **42** in a way well-known to those skilled in the art. The stator **42** is fixedly connected to the motor housing **16** and in turn fixedly connected to the axle **10** due to the flat key **31** mentioned above, so that both the stator **42** and the motor housing **16** remain still during operation of the power wheel. On the other side, the rotor **40** has a size defined by a rotor housing. The rotor housing has a circular shape which is similar to the shape of a conventional rotor. One can see from Fig. 2 that in this embodiment the rotor housing is consisted of a circumferential wall **40b** and one side wall **40a** at a first end of the rotor. However, there is no side wall forming the rotor housing **40** at a second end of the rotor opposite to the first end along the axial direction. Rather, the rotor **40** is rotatably supported on the motor housing **16** via a third bearing **12.** There are magnets **41** arranged on top of the rotor housing **40** at an external surface of the circumferential wall **40b.**

The power wheel hub as shown in Fig. 2 contains both a gear reduction module and a one-way transmission module, both of which are positioned within the rotor housing **40** such that no part of the gear reduction module and the one-way transmission module is external to the motor. In the gear reduction module, there is an eccentric gear **17** supported by a fourth bearing **15** on the axle **10,** and as a result the eccentric gear **17** is rotatable relative to the axle **10.** The eccentric gear **17** is further fixedly connected to the side wall **40a** of the rotor housing via a flat key **44** and rotates at the same time with the rotor housing. In particular, the eccentric gear **17** is in a two-stepped tubular shape, a first segment of which is connected to the rotor housing and supported by the fourth bearing **15.** A second segment of the eccentric gear **17** on the other end is coupled to an external ring gear **19.** There is also a counterbalance member **29** fixed to the eccentric gear **17** to balance vibration caused by the eccentrically rotating of the eccentric gear **17.** The rotation of the eccentric gear **17** causes the external ring gear **19** to move. At the same time, the external ring gear **19** is supported on the eccentric gear **17** via one or more fifth bearings **21.** Note that both the first segment and second segment of the eccentric gear **17** have different thicknesses around their circumferential directions. Such inequality in thickness results in the eccentric gear **17** outputting an eccentric movement, as will be described in more details later.

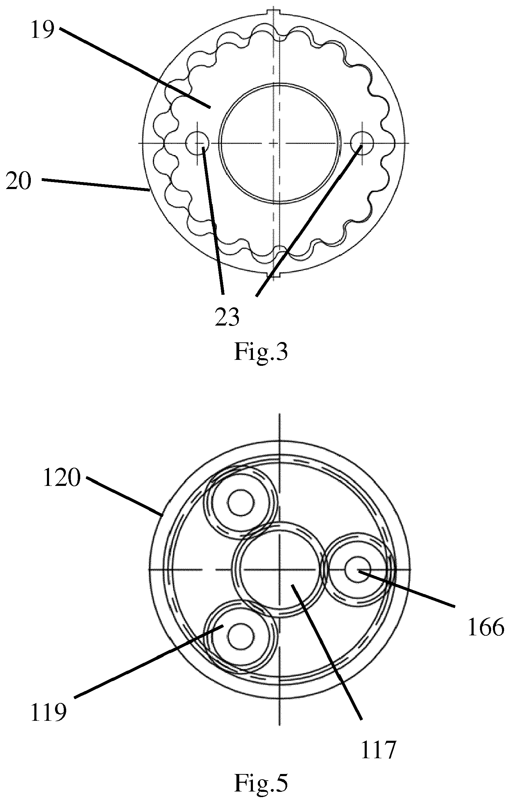

The external ring gear **19** is confined by an internal ring gear **20.** Fig. 3 best illustrates the shape and mutual spatial relationship between the external ring gear **19** and the internal ring gear **20.** The external ring gear **19** is adapted to revolve within the internal ring gear **20.** The internal ring gear **20** is called as such since its teeth are formed at an interior circumferential surface of the internal ring gear **20.** Correspondingly, the teeth of the external ring gear **19** are formed at an exterior circumferential surface of the external ring gear **19.** The radius of the external ring gear **19** is smaller than that of the internal ring gear **20,** and the number of teeth on the external ring gear **19** is also slightly less than that of the teeth on the internal ring gear **20.** In the embodiment shown in Fig. 3, there are eighteen teeth on the external ring gear **19** but nineteen teeth on the internal ring gear **20.** Due to difference in their sizes, the center of the external ring gear **19** is offset from that of the internal ring gear **20.** The external ring gear **19** is adapted to revolve within the internal ring gear **20** but at any time, there are only a part of the teeth on the external ring gear **19** engaged with only a part of the teeth on the internal ring gear **20.** At the moment as shown in Fig. 3, there are only three teeth from each of the external ring gear **19** and the internal ring gear **20** which are completely engaged. There are two mounting holes **23** formed on the external ring gear **19** for coupling to an output of the gear reduction module, which will be described in more details later.

Turning back to Fig. 2, the internal ring gear **20** is fixed to the gear support **24** which in turn is fixed to the motor housing **16.** As a result, the internal ring gear **20** is not adapted to rotate. Bushings **25** are mounted to the external ring gear **19** at mounting holes **23** as described above. The bushings **25** couple the external ring gear **19** to one end of an output carrier **22.** The output carrier **22** is rotatably supported on the gear support **24** via one or more sixth bearings **35.** The output carrier **22** is configured to rotate relative to the axle **10** but is not directly connected to the axle **10.** The other end of the output carrier **22** is supported by a one-way transmission mechanism on a connecting flange **26.** The one-way transmission mechanism in this embodiment is a one-way clutch **27.** The connecting flange **26** is fixed to the side cover **7** of the hub housing by screws **28.** The connecting flange **26** and the hub housing therefore rotate at the same time. On the other end of the axle **10,** there is connected a braking flange **47** which is fixedly connected to the wheel hub housing.

The one-way clutch **27** can adopt any known structures as appreciated by skilled persons in the art. As an exemplary implementation only, the one-way clutch **27** could include a flywheel which have a follower (e.g. a ratchet) and a driving part (e.g. a ring gear), all of which are not shown in the drawings.. As those skilled would understand, the follower will be driven by the driving part to rotate only when the rotational speed of the driving part is larger than that of the follower. Conversely, when the follower rotates at a speed larger than that of the driving part, the follower slips over the driving part and not causing the latter to rotate.

Now turning to the operation of the power wheel described above. With reference to Fig. 2, during operation the rotor of the motor in the power wheel once energized will start to rotate around the central axis **43** due to change of magnetic flux between the stator **42** and the rotor **40.** Rotation of the rotor means that the rotor housing on which the magnets **41** are fixed rotates relative to the axle **10.** Next, as the eccentric gear **17** is fixedly connected to the rotor housing **40,** the eccentric gear **17** rotates around the central axis **43.** However, due to the eccentric shape of the eccentric gear **17** as described above, the eccentric gear **17** transmits an eccentric driving force to the external ring gear **19** via the connecting member **29.** As the external ring gear **19** is limited within the fixed internal ring gear **20,** and that only parts of their teeth engage at any time, the external ring gear **19** revolves within the internal ring gear **20** as a result of the eccentric gear **17** rotating. The fifth bearing **21** provides supports for the external ring gear **19** during its revolving action. The revolving movement of the external ring gear **19** is then transmitted to the output carrier **22** via the bushings **25.** The rotation of output carrier **22** is again concentric with that of the rotor **40.** Note that the rotational speed of the output carrier **22** is smaller than that of the rotor **40** due to the engagement of various gears described above which have different shapes and number of teeth, and in particular that the number of teeth on the external ring gear **19** is slightly less than that of the teeth on the internal ring gear **20.** The ratio of gear speed reduction can be configured as desired, for example in the range of 10% to 50%. The output carrier **22** then drives the connecting flange **26** to rotate via the one-way clutch **27,** if the power wheel does not rotates or rotates at a speed slower than that of the connecting flange **26.** In this case the one-way clutch **27** operates to transmit the power from the output carrier **22** to the connecting flange **26.** The connecting flange **26** is fixed to the hub housing and in turn to the sprocket **30,** so rotation of the connecting flange **26** causes the power wheel to rotate, thus moving the bicycle installed with the power wheel forward. During the whole process the axle **10** is always still.

However, if the motor in the power wheel rotates, but the power wheel rotates at a speed even faster than that of the speed of the connecting flange **26,** then the one-way clutch **27** is disabled and does not transmit the power from the output carrier **22** to the connecting flange **26.** In consequence, the (faster) rotation of the power wheel, such as in the case when the user is riding the bicycle downhill, or he pedals the bicycle very fast, does not cause the motor in the wheel hub to rotate.

The eccentric gear module in the above embodiment helps to counterbalance the vibration caused by the bicycle during cycling and as a result the effect of such vibration to the motor will be minimized.

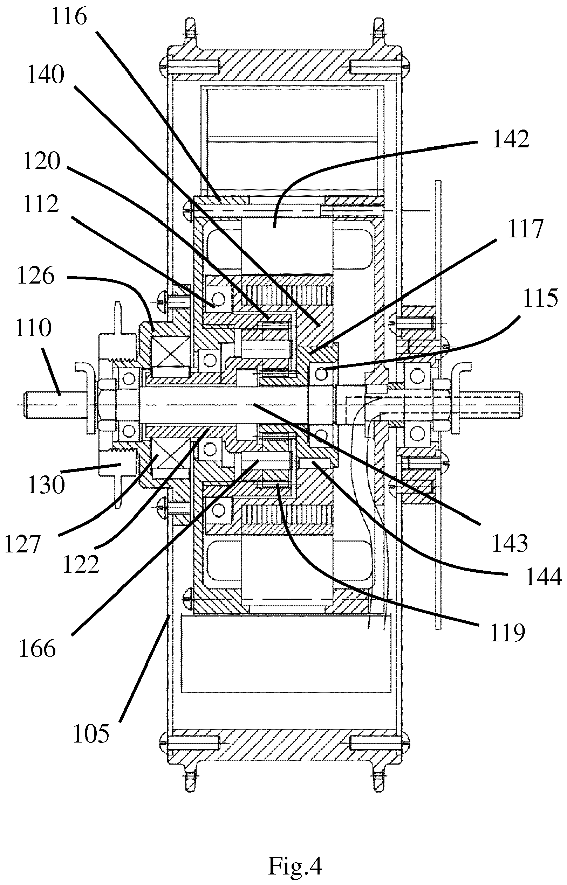

Figs. 4-5 show a power wheel hub according to another embodiment of the present invention, where the wheel hub does not contain the eccentric gear module, but instead a planetary gear module. For the sake of brevity, only components of the wheel hub that are different from those as described with reference to Figs. 2-3 will be described here. In this embodiment, the planetary gear module is contained within the rotor of the motor, but the one-way transmission module is not. In particular, the motor in the embodiment contains a stator **142** and a rotor **140.** The rotor **140** is configured to be rotatable with respect to the axle **110,** and is supported by a first bearing **112** on the motor housing **116.** A sun gear **117** is supported on the axle **110** by a second bearing **115,** and the sun gear **117** is fixedly connected to the rotor **140** by a flat key **144.** The sun gear **117** engages with a plurality of planetary gears **119** which can revolve around the central axis **143** of the motor and also rotate around their respective rotating axis.

Fig. 5 shows the planetary module of the wheel hub in Fig. 3 in more details. There are three planetary gears **119,** which are engaged with the sun gear **117** and an internal ring gear **120** at the same time. The internal ring gear **120** is fixed to the motor housing via threads and thus not rotatable. However, due to the engagement between the internal ring gear **120** and the planetary gears **119** the planetary gears 119 are able to rotate and revolve at the same time as a result of the sun gear **117** rotating. One can see that the internal ring gear **120,** the sun gear **117,** and the revolving movement of the planetary gears **119** all share the same central axis.

Turning back to Fig. 4, the internal ring gear **120** is fixed to the motor housing **116.** Each planetary gear **119** is rotatably sleeved on a respective planetary shaft **166.** The planetary shafts **166** are tightly pressed onto the output carrier **122.** The output carrier **122** provides the output driving force of the gear reduction module. The output carrier **122** is coupled a connecting flange **126** via a one-way clutch **127.** The connecting flange **126** is fixedly connected to both a side cover **105** of the hub housing and the sprocket **130** so that they rotate together in any event.

During operation, the rotor of the motor in the power wheel once energized will start to rotate around the central axis **143** due to change of magnetic flux between the stator **142** and the rotor **140.** Next, as the sun gear **117** is fixedly connected to the rotor **140,** the sun gear **117** rotates around the central axis **143.** Since the planetary gears **119** are confined within the fixed internal ring gear **120,** the planetary gears **119** rotate and revolve at the same time as a result of the sun gear **117** rotating. The planetary gears **119** then drive the output carrier **122** to rotate around the central axis **143** at a speed lower than that of the rotor **140** but at a torque higher than that of the rotor **140.** The output carrier **122** then drives the connecting flange **126** to rotate via the one-way clutch **127,** if the power wheel does not rotates or rotates at a speed slower than that of the connecting flange **126.** In this case the one-way clutch **127** operates to transmit the power from the output carrier **122** to the connecting flange **126.** The connecting flange **126** is fixed to the hub housing and in turn to the sprocket **130,** so rotation of the connecting flange **126** causes the power wheel to rotate, thus moving the bicycle installed with the power wheel forward. During the whole process above the axle **110** is always still.

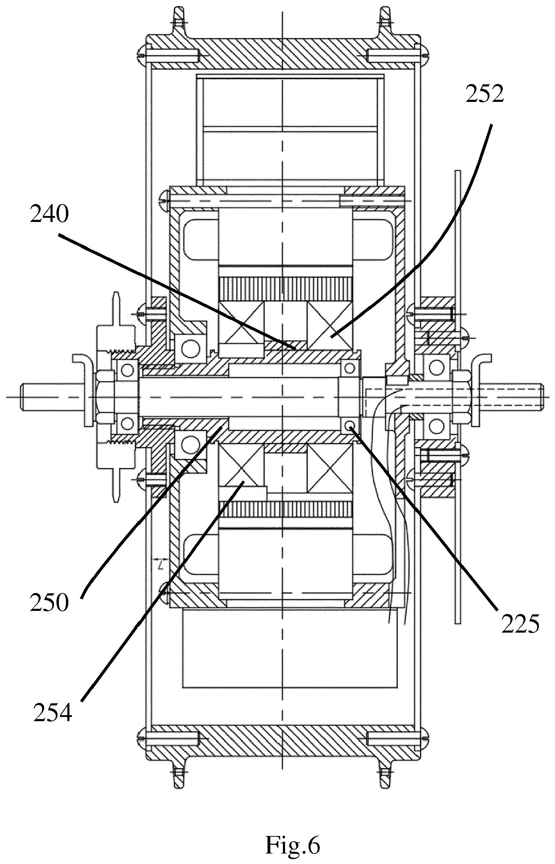

Fig. 6 illustrates a further embodiment of the present invention. For the sake of brevity, only components of the wheel hub that are different from those as described with reference to Figs. 2-3 will be described here. In this embodiment there is no gear reduction modules present. Rather, the rotor **240** is directly support on a hollow shaft **250** of the motor via a first bearing **252,** which is in turn supported on the axle **210** via a second bearing **225.** The axle **210** passes through the hollow shaft **250** but these two do not rotate together. However, the rotor **240** drives the hollow shaft **250** to rotate only through a one-way bearing **254,** but not through the bearing **252** which serves no driving power transmission functions. The hollow shaft **222** is coupled a connecting flange **226** which is fixedly connected to both a side cover of the hub housing **207** and the sprocket **230** so that they rotate together in any event.

During operation, the rotor **240** directly drives the motor shaft **222** through the one-way bearing **254,** where the motor shaft **222** in turn drives the power wheel to rotate. The one-way bearing **254** just like other one-way transmission mechanisms allows the power to be transmitted from the rotor to the motor when the rotor is rotating at a speed higher than that of the wheel. However, when the power wheel rotates at a speed even faster than that of the speed of rotor, then the one-way bearing **254** is disabled and does not transmit the power from the rotor to the motor shaft. In consequence, the (faster) rotation of the power wheel, such as in the case when the user is riding the bicycle downhill, or he pedals the bicycle very fast, does not cause the motor in the wheel hub to rotate.

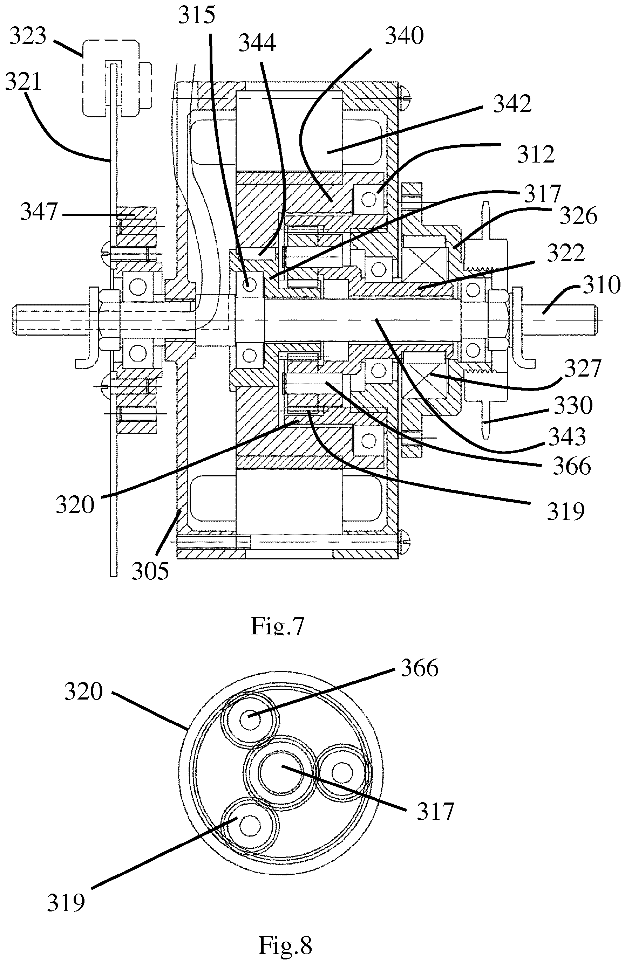

Figs. 7-8 illustrate a further embodiment of the present invention of a motor in a power wheel hub. For the sake of brevity, only components of the motor that are different from those as described with reference to Figs. 2-3 will be described here. In particular, the motor in the embodiment contains a stator **342** and a rotor **340.** The rotor **340** is configured to be rotatable with respect to the axle **310,** and is supported by a first bearing **312** on the motor housing **316.** A sun gear **317** is supported on the axle **310** by a second bearing **315,** and the sun gear **317** is fixedly connected to the rotor **340** by a flat key **344.** The sun gear **317** engages with a plurality of planetary gears **319** which can revolve around the central axis **343** of the motor and also rotate around their respective rotating axis. Similar to the power wheel hub shown in Fig. 2, in Fig. 7 the power wheel hub has on its one end a sprocket **330** and on its other end a braking flange **347.** The sprocket **330** is rotatable together with a side cover **305** of the hub housing. The sprocket **330** is capable of engaging with a chain (not shown) of a bicycle as those skilled in the art would understand. The braking flange **347** has an extension part **321** which is in a disc shape. The extension part **321** can be used for performing braking actions to the power wheel by a disc brake **323** as those skilled in the art is familiar with.

Fig. 8 shows the planetary module of the motor in Fig. 7 in more details. There are three planetary gears **319,** which are engaged with the sun gear **317** and an internal ring gear **320** at the same time. The internal ring gear **320** is fixed to the motor housing via threads and thus not rotatable. However, due to the engagement between the internal ring gear **320** and the planetary gears **319** the planetary gears **319** are able to rotate and revolve at the same time as a result of the sun gear **317** rotating. One can see that the internal ring gear **320,** the sun gear **317,** and the revolving movement of the planetary gears **319** all share the same central axis.

Turning back to Fig. 7, the internal ring gear **320** is fixed to the motor housing **316.** Each planetary gear **319** is rotatably sleeved on a respective planetary shaft **366.** The planetary shafts **366** are tightly pressed onto the output carrier **322.** The output carrier **322** provides the output driving force of the gear reduction module. The output carrier **322** is coupled a connecting flange **326** via a one-way clutch **327.** The connecting flange **326** is fixedly connected to both the side cover **305** of the hub housing and the sprocket **330** so that they rotate together in any event.

During operation, the rotor of the motor in the power wheel once energized will start to rotate around the central axis **343** due to change of magnetic flux between the stator **342** and the rotor **340.** Next, as the sun gear **317** is fixedly connected to the rotor **340,** the sun gear **317** rotates around the central axis **343.** Since the planetary gears **319** are confined within the fixed internal ring gear **320,** the planetary gears **319** rotate and revolve at the same time as a result of the sun gear **317** rotating. The planetary gears **319** then drive the output carrier **322** to rotate around the central axis **343** at a speed lower than that of the rotor **340** but at a torque higher than that of the rotor **340.** The output carrier **322** then drives the connecting flange **326** to rotate via the one-way clutch **327,** if the power wheel does not rotates or rotates at a speed slower than that of the connecting flange **326.** In this case the one-way clutch **327** operates to transmit the power from the output carrier **322** to the connecting flange **326.** The connecting flange **326** is fixed to the hub housing and in turn to the sprocket **330,** so rotation of the connecting flange **326** causes the power wheel to rotate, thus moving the bicycle installed with the power wheel forward. During the whole process above the axle **310** is always still.

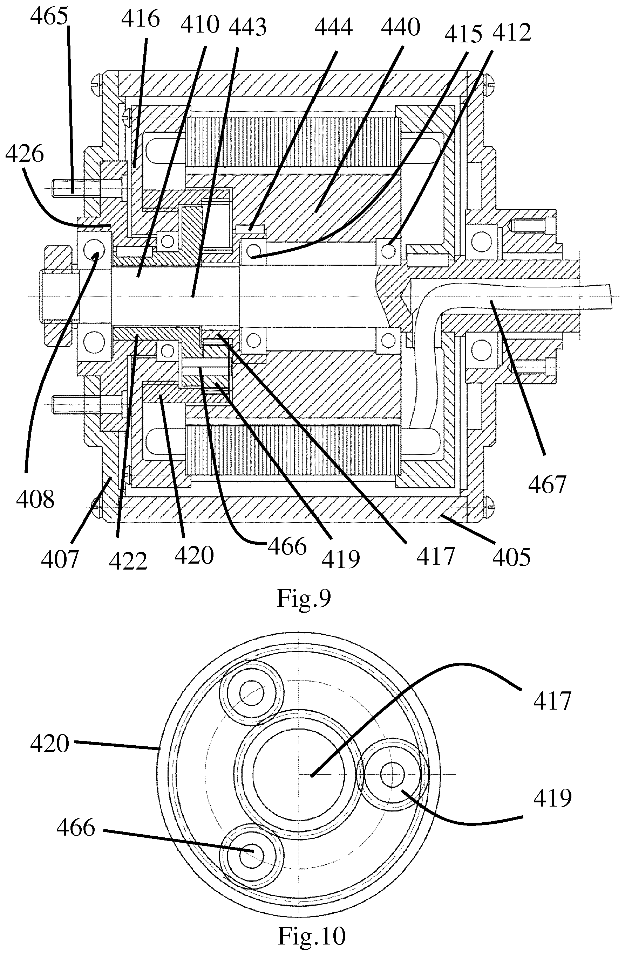

Turning now to Figs. 9-10, another embodiment of the present invention show a wheel hub for a power wheel suitable for using on an automobile. For the sake of brevity, only components of the motor that are different from those as described with reference to Figs. 2-3 will be described here. In particular, in this embodiment components necessary for bicycles are not present, including but not limited to sprocket, chains, etc. Also, in the power wheel hub shown in Figs. 9-10 the power supply for operating the motor in the wheel hub is placed outside the wheel hub, for example in a location in the automobile. The electrical power is transmitted from the power supply to the motor via wires **467.** The wheel hub as shown contains a circular top cover **405,** which are fixed to two side covers **407** to form the wheel hub housing. A plurality of wheel studs **465** secure a connecting flange **426** to the hub housing so that they can rotate at the same time. The wheel studs **465** as skilled persons would understand are used for installing wheels of the automobile on the wheel hub.

The motor is located in wheel hub with no space left for placing other components such as batteries. The motor contains a motor housing **416** inside which a stator **442** and a rotor **440** are configured. The motor housing **416** has a similar structure as that of the wheel hub housing. The rotor **440** is configured to be rotatable with respect to the axle **410,** and is supported by one or more first bearings **412** on the axle **410.** A sun gear **417** is supported on the axle **410** by one or more second bearings **415,** and the sun gear **417** is fixedly connected to the rotor **440** by a flat key **444.** The sun gear **417** engages with a plurality of planetary gears **419** which can revolve around the central axis **443** of the motor and also rotate around their respective rotating axis.

Fig. 10 shows the planetary module of the motor in Fig. 9 in more details. There are three planetary gears **419,** which are engaged with the sun gear **417** and an internal ring gear **420** at the same time. The internal ring gear **420** is fixed to the motor housing via threads and thus not rotatable. However, due to the engagement between the internal ring gear **420** and the planetary gears **419** the planetary gears **419** are able to rotate and revolve at the same time as a result of the sun gear **417** rotating. One can see that the internal ring gear **420,** the sun gear **417,** and the revolving movement of the planetary gears **419** all share the same central axis.

Turning back to Fig. 9, the internal ring gear **420** is fixed to the motor housing **416.** Each planetary gear **419** is rotatably sleeved on a respective planetary shaft **466.** The planetary shafts **466** are tightly pressed onto the output carrier **422.** The output carrier **422** provides the output driving force of the gear reduction module. The connecting flange **426** is then connected to the side cover **407** of the hub housing as mentioned previously.

During operation, the rotor of the motor in the power wheel once energized will start to rotate around the central axis **443** due to change of magnetic flux between the stator **442** and the rotor **440.** Next, as the sun gear **417** is fixedly connected to the rotor **440,** the sun gear **417** rotates around the central axis **443.** Since the planetary gears **419** are confined within the fixed internal ring gear **420,** the planetary gears **419** rotate and revolve at the same time as a result of the sun gear **417** rotating. The planetary gears **419** then drive the output carrier **422** to rotate around the central axis **443** at a speed lower than that of the rotor **440** but at a torque higher than that of the rotor **440.** The output carrier **422** then drives the connecting flange **426** to rotate.

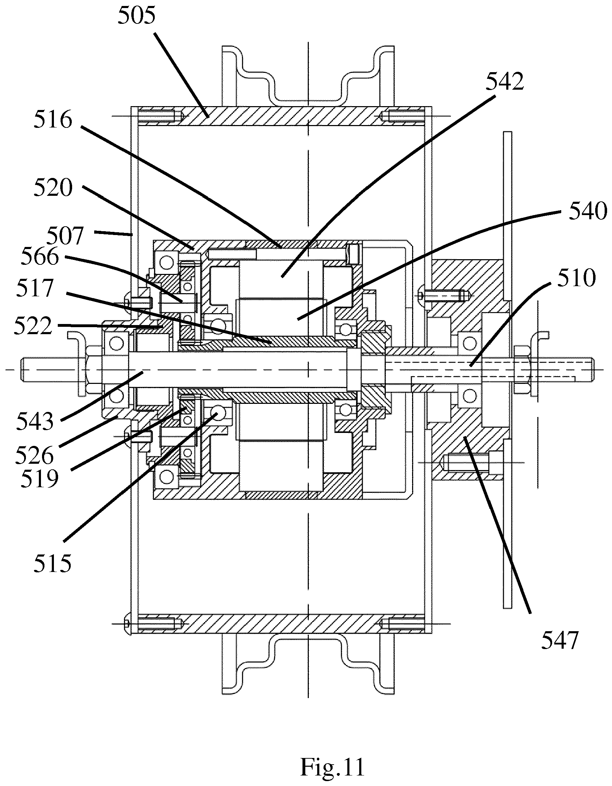

Turning now to Fig. 11, another embodiment of the present invention show a wheel hub for a power wheel suitable for using on an electric motorcycle. For the sake of brevity, only components of the motor that are different from those as described with reference to Figs. 2-3 will be described here. The wheel hub as shown contains a circular top cover **505,** which are fixed to two side covers **507** to form the wheel hub housing. A motor housing **516** is arranged coaxially with the hub housing and placed inside the hub housing. There are some other spaces between the motor housing **516** and the top cover **505** for accommodating components like batteries of the power wheel. The motor contains a stator **542** and a rotor **540.** The rotor **540** is configured to be rotatable with respect to the axle **510.**

In this embodiment, the gear reduction module is no longer placed inside the rotor **540** of the motor. Rather, the gear reduction module is placed inside the motor housing **516** but outside the rotor **540** and the stator **542.** In particular, a sun gear **517** is supported on the axle **510** by one or more second bearings **515.** The sun gear **517** engages with a plurality of planetary gears **519** which can revolve around the central axis **543** of the motor and also rotate around their respective rotating axis. An internal ring gear **520** is fixed to the motor housing **516.** Each planetary gear **519** is rotatably sleeved on a respective planetary shaft **566.** The planetary shafts **566** are tightly pressed onto the output carrier **522.** The output carrier **522** provides the output driving force of the gear reduction module to a connecting flange **526,** which is then connected to the side cover **507** of the hub housing. On an end of the axle **510,** there is connected a braking flange **547** which is fixedly connected to the wheel hub housing.

During operation, the rotor of the motor in the power wheel once energized will start to rotate around the central axis **543** due to change of magnetic flux between the stator **542** and the rotor **540.** Next, as the sun gear **517** is fixedly connected to the rotor **540,** the sun gear **517** rotates around the central axis **543.** Since the planetary gears **519** are confined within the fixed internal ring gear **520,** the planetary gears **519** rotate and revolve at the same time as a result of the sun gear **517** rotating. The planetary gears **519** then drive the output carrier **522** to rotate around the central axis **543** at a speed lower than that of the rotor **540** but at a torque higher than that of the rotor **540.** The output carrier **522** then drives the connecting flange **526** to rotate.

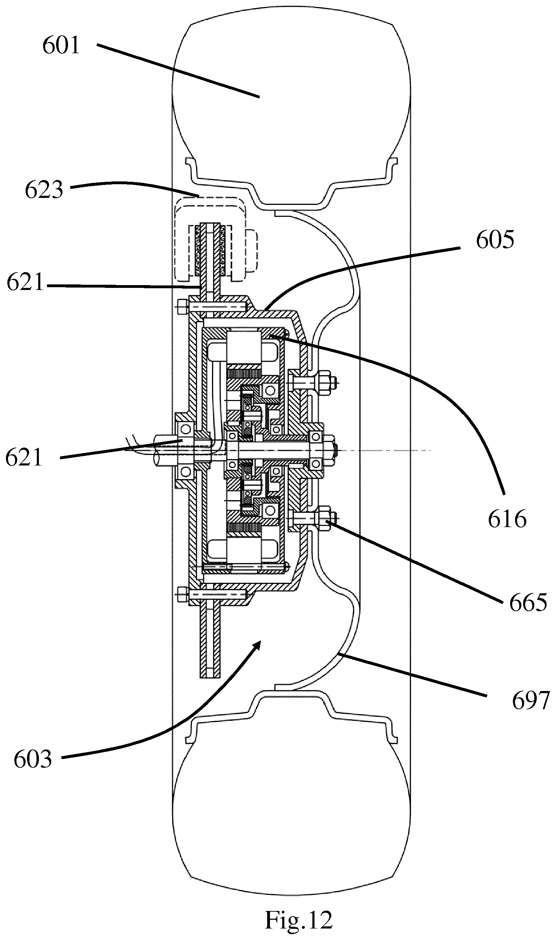

Turning now to Fig. 12, a further embodiment of the present invention show a power wheel suitable for using on an automobile. For the sake of brevity, only components of the motor that are different from those as described with reference to previous figures will be described here. The power wheel shown in Fig. 12 is different from that shown in Figs. 9-10 in that the power wheel in Fig. 12 adopts an in-rotor design for the gear reduction mechanisms, similar to those shown in Figs. 1-8. The motor in the power wheel in Fig. 12 has a structure most similar to that in Fig. 4, which uses a planetary gear system residing within the rotor to reduce the output speed of the motor. There is no battery module placed between the motor housing **616** and the wheel hub housing **605.** Rather, the battery module for driving the vehicle is located in a different location in the vehicle frame (not shown) since the battery capacity needed to drive the vehicle and to ensure a desired endurance. Near one end of the axle **610,** there is an extension part **621** extending along a radially outward direction which is formed on the wheel hub housing **605.** The extension part **621** is adapted to engage with a disc brake **623** to perform braking actions. The entire wheel hub **603** is accommodated within the space formed by the wheel trim **697** and detachably secured to the same by multiple screws **665.** On the circumferential surface of the wheel trim **697,** there is covered the tyre **601.**

The exemplary embodiments of the present invention are thus fully described. Although the description referred to particular embodiments, it will be clear to one skilled in the art that the present invention may be practiced with variation of these specific details. Hence this invention should not be construed as limited to the embodiments set forth herein.

While the invention has been illustrated and described in detail in the drawings and foregoing description, the same is to be considered as illustrative and not restrictive in character, it being understood that only exemplary embodiments have been shown and described and do not limit the scope of the invention in any manner. It can be appreciated that any of the features described herein may be used with any embodiment. The illustrative embodiments are not exclusive of each other or of other embodiments not recited herein. Accordingly, the invention also provides embodiments that comprise combinations of one or more of the illustrative embodiments described above. Modifications and variations of the invention as herein set forth can be made without departing from the spirit and scope thereof, and, therefore, only such limitations should be imposed as are indicated by the appended claims.

For example, the power wheels as described and illustrated in Figs. 1-8 are made into standard bicycle wheel size. However, it is clear that for other types of vehicles, the power wheels according to the present invention can also be made into other dimensions, such as with different radius and width (when looking along the radial direction). In particular, the housing of the power wheel hub can be designed to have a larger radius and/or width, therefore providing more or less interior space for accommodating the battery cells.

In a variation of the present invention, the bicycle on which power wheels are installed do not have the sprocket and chain system for driving the wheels using pedaling force. Rather, an electrical generator is coupled to the pedals so that the pedaling action by the cyclist causes the generator to generate electric power. The electric power is then transmitted to the battery module for recharging the battery module. At the same time, the pedals are connected to a sensor which is able to generate control commands to the power wheel controller according to the force, speed, torque, etc. of the pedals. The power wheel may then be controlled according to the commands generated by the pedaling actions of the cyclist.

In the preferred embodiments described above, the power wheels are installed on a bicycle. No doubt that the power wheels may also be used in other types of vehicle to achieve self-propelling, such as unicycle, bicycle, tricycle, or four-wheel vehicle.

## Claims

1. A wheel hub capable of being coupled to an axle of a wheel such that the wheel hub is rotatable around the axle, the wheel hub comprising:
a) a hub housing adapted to be rotatably supported on the axle;
b) a motor comprising a stator and a rotor; the stator adapted to be fixedly connected to the axle; the rotor configured to be rotatable with respect to the stator;
wherein the rotor comprising a circular rotor housing inside which a gear reduction module is located; the output of the gear reduction module connected to a one-way transmission module which in turn is adapted to drive the hub housing to rotate.

2. The wheel hub of claim 1, wherein the gear reduction module further comprises an eccentric gear module; an input of the eccentric gear module connected to the rotor housing; an output of the eccentric gear module connected to the one-way transmission module.

3. The wheel hub of claim 2, wherein the eccentric gear module further comprises an eccentric gear adapted to be rotatably supported on the axle; the eccentric gear fixedly connected to the rotor housing and being drivable by the latter to rotate;
preferably,
the eccentric gear is coupled to an external ring gear via a connecting member; the external ring gear adapted to revolve within an internal ring gear fixedly mounted on the hub housing.

4. The wheel hub of claim 3, wherein the external ring gear comprises external teeth; the internal ring gear comprising internal teeth; only a part of the external teeth engaging with only a part of the internal teeth at any time; the external ring gear having a central axis offset from that of the internal ring gear.

5. The wheel hub of claim 4, wherein the number of the external teeth is smaller than that of the internal teeth.

6. The wheel hub of claim 4, wherein the external ring gear is coupled to an output carrier to drive the latter to rotate; the output carrier coupled to the one-way transmission module to provide the output of the gear reduction module thereto; the output carrier having a same axis of rotation with the rotor.

7. The wheel hub of claim 1, wherein the gear reduction module is a planetary gear module; an input of the planetary gear module connected to an output shaft of the motor; an output of the planetary gear module connected to the hub housing;
preferably,
the planetary gear module further comprises a sun gear adapted to be rotatably supported on the axle; the sun gear fixedly connected to the rotor housing and being drivable by the latter to rotate.

8. The wheel hub of claim 7, wherein the sun gear is coupled to a plurality of planetary gears confined by an internal ring gear fixedly mounted on the hub housing; the planetary gears adapted to revolve around the sun gear within the internal ring gear;
preferably,
the plurality of planetary gears are coupled to an output carrier to drive the latter to rotate; the output carrier coupled to the one-way transmission module to provide the output of the gear reduction module thereto; the output carrier having a same axis of rotation with the axle.

9. The wheel hub of claim 1, wherein the one-way transmission module is a one-way transmission clutch;
or,
the wheel hub comprises a sprocket fixedly connected to the housing; the sprocket adapted to be connected to and driven by an external chain.

10. The wheel hub of claim 1, wherein the one-way transmission module is a one-way bearing supporting the gear reduction module on the hub housing;
preferably,
the one-way bearing is at least partially received in the rotor housing.

11. A power wheel which is adapted to be coupled to a vehicle frame, comprising:
a) an axle for connecting the power wheel to the vehicle frame;
b) a wheel hub according to claim 1; and
c) a rim fixedly connected to a hub housing of the wheel hub.

12. A wheel hub capable of being coupled to an axle of a wheel such that the wheel hub is rotatable around the axle, the wheel hub comprising:
a) a hub housing adapted to be rotatably supported on the axle;
b) a motor comprising a stator and a rotor; the stator adapted to be fixedly connected to the axle; the rotor configured to be rotatable with respect to the stator;
wherein the rotor comprising a rotor housing; the rotor further comprising a one-way transmission module and a bearing which are located within the rotor housing.

13. The wheel hub of claim 12, wherein the one-way transmission module and the bearing couple the rotor to an output carrier; the output carrier fixedly connected to the hub housing and adapted to drive the latter to rotate with respect to the axle.

14. The wheel hub of claim 13, wherein the one-way transmission module and the bearing are aligned along an axial direction of the motor;
preferably,
the one-way transmission module is a one-way bearing.

15. A power wheel which is adapted to be coupled to a vehicle frame, comprising:
a) an axle for connecting the power wheel to the vehicle frame;
b) a wheel hub according to claim 12; and
c) a rim fixedly connected to a hub housing of the wheel hub.
